(19)

Europäisches
Patentamt
European
Patent Office
Office européen
des brevets

(11)  **EP 4 676 053 A1**

(12)  **EUROPEAN PATENT APPLICATION**

(43) Date of publication:
**07.01.2026  Bulletin 2026/02**

(21) Application number: **24306080.3**

(22) Date of filing: **02.07.2024**

(51) International Patent Classification (IPC):
**H04N 19/33** (2014.01)        **H04N 19/46** (2014.01)
**H04N 19/70** (2014.01)

(52) Cooperative Patent Classification (CPC):
**H04N 19/70; H04N 19/33; H04N 19/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **URBAN, Fabrice**
  **35235 THORIGNE-FOUILLARD (FR)**
• **DOYEN, Didier**
  **35510 CESSON-SEVIGNE (FR)**
• **DE LAGRANGE, Philippe**
  **35830 BETTON (FR)**
• **FRANCOIS, Edouard**
  **35890 BOURG DES COMPTES (FR)**

(74) Representative: **Vossius & Partner**
**Patentanwälte Rechtsanwälte mbB**
**Siebertstraße 3**
**81675 München (DE)**

(54)    **REGION PACKING WITH MULTI-LAYER FUNCTIONALITY**

(57)    Region packing information supplemental enhancement information (SEI) messages with multi-layer functionality. One example method includes receiving, with a decoder, a bitstream, the bitstream including packed regions of interest of an image, and decoding, with the decoder, a multilayer flag and an SEI message from the bitstream. The method includes determining, with the decoder, whether to decode region layer information from the SEI message for the packed regions of interest based on the multilayer flag and recomposing, with the decoder, the image from the region layer information.

FIG. 6

**Description**

FIELD OF THE INVENTION

The present disclosure relates generally to video coding. More specifically, examples described herein relate to encoding and decoding region packing information with multi-layer functionality.

SUMMARY

For some applications, specific regions of a pictures (for example, images or video frames) are of greater interest than the rest of the video and are referred to as regions of interest (ROIs). An encoding system may pack selected ROIs within a coded bitstream. For example, in some instances, pixel rate complexity and bitrate are reduced by coding a picture containing only the ROIs. Supplemental enhancement information (SEI) messages described herein enable interoperability for such applications by signaling the locations and sizes of the ROIs within the coded picture. For reconstruction of a target picture, signaling of corresponding region locations within a target picture may be provided.
In some instances, some regions of a video picture may require retaining full resolution, while other regions may be downsampled. Selective resampling of regions may be, where a subset of regions (for example, one of two regions) is downsampled.
In some instances, background regions may be included within the coded picture. In such instances, a region ID may be used to determine precedence between regions in a reconstructed target picture. An encoding system may reduce bitrate by filtering or replacing the areas of the downsampled background corresponding to selected regions that are also signaled in the coded picture.
Additionally, in some instances, to reduce bitrate for signaling the region sizes and locations, a unit size is additionally signaled (for example, as a power of two). In some instances, for efficient usage of the SEI message with reference picture resampling (RPR), a flag may be implemented to indicate that the region sizes and locations signaled are with respect to the maximum picture size signaled in the Adaptive Parameter Sets, Video Parameter Sets, or Sequence Parameter Sets rather than the current picture size. In such an instance, the re-signaling of region sizes and locations for each picture is avoided when using RPR.
Region packing with SEI messages is not compatible with multi-layer bitstreams. Examples described herein further build on region packing functionality by encoding and transmitting regions in different layers. The use of multiple layers provides for different encoder and quality settings and adds additional functionalities to region packing alone, such as providing for changing the background and/or dynamically changing a region resolution without redoing all of the frame packing. A multilayer flag may be transmitted on the bitstream alongside the SEI message to indicate whether multi-layer coding was implemented. Layer information may be provided for each ROI, and used layers may be signaled prior to region descriptions.
In one aspect, a method includes receiving, with a decoder, a bitstream, the bitstream including packed regions of interest of an image, and decoding, with the decoder, a multilayer flag and an SEI message from the bitstream. The method includes determining, with the decoder, whether to decode region layer information from the SEI message for the packed regions of interest based on the multilayer flag and recomposing, with the decoder, the image from the region layer information.
In another aspect, a method includes receiving, with an encoder, an image including packed regions of interest, each packed region of interest distributed individually on only one of two or more layers, generating, with the encoder, a bitstream based on the packed regions of interest and the image, the bitstream including a multilayer flag indicating the two or more layers, and outputting, with the encoder, the bitstream.
Other examples, implementations, features, and aspects will become apparent by consideration of the detailed description and accompanying drawings.

BRIEF DESCRIPTION OF THE DRAWINGS

In the accompanying figures similar or the same reference numerals may be repeated to indicate corresponding or analogous elements. These figures, together with the detailed description, below are incorporated in and form part of the specification and serve to further illustrate various embodiments, examples, aspects, and features of concepts that include the claimed subject matter, and to explain various principles and advantages of those embodiments, examples, aspects, and features.

FIG. 1 is a block diagram illustrating a system, in accordance with various aspects of the disclosure.

FIG. 2 is a block diagram illustrating a hybrid video encoder, in accordance with various aspects of the present disclosure.

FIG. 3 is a block diagram illustrating a video decoder, in accordance with various aspects of the present disclosure.

FIG. 4 is a block diagram illustrating a multi-layer implementation of multilayer encoding and decoding.

FIG. 5 is an example of encoding and decoding packed regions using a region packing information SEI message.

FIG. 6 is a flow diagram that illustrates processing of a decoder, in accordance with various aspects of the present disclosure.

FIG. 7 is an example of encoding and decoding multilayer packed regions using a region packing information SEI message.

Skilled artisans will appreciate that elements in the figures are illustrated for simplicity and clarity and have not necessarily been drawn to scale. For example, the dimensions of some of the elements in the figures may be exaggerated relative to other elements to help improve understanding of the examples, aspects, and features presented in this disclosure.

The system, apparatus, and method components have been represented where appropriate by conventional symbols in the drawings, showing only those specific details that are pertinent to understanding of the various embodiments, examples, aspects, and features of the present disclosure so as not to obscure the disclosure with details that will be readily apparent to those of ordinary skill in the art having the benefit of the description herein.

DETAILED DESCRIPTION

Examples are herein described with reference to flowchart illustrations and/or block diagrams of methods, apparatus (systems) and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a special purpose and unique machine, such that the instructions, which execute via the processor of the computer or other programmable data processing apparatus, create means for implementing the functions/acts specified in the flowchart and/or block diagram block or blocks. The methods and processes set forth herein need not, in some aspects, be performed in the exact sequence as shown and likewise various blocks may be performed in parallel rather than in sequence. Accordingly, the elements of methods and processes are referred to herein as "blocks" rather than "steps."

These computer program instructions may also be stored in a computer-readable memory that can direct a computer or other programmable data processing apparatus to function in a particular manner, such that the instructions stored in the computer-readable memory produce an article of manufacture including instructions which implement the function/act specified in the flowchart and/or block diagram block or blocks.

The computer program instructions may also be loaded onto a computer or other programmable data processing apparatus that may be on or off-premises, or may be accessed via the cloud in any of a software as a service (SaaS), platform as a service (PaaS), or infrastructure as a service (IaaS) architecture so as to cause a series of operational blocks to be performed on the computer or other programmable apparatus to produce a computer implemented process such that the instructions which execute on the computer or other programmable apparatus provide blocks for implementing the functions/acts specified in the flowchart and/or block diagram block or blocks. It is contemplated that any part of any example, feature, aspect, or embodiment discussed in this specification can be implemented or combined with any part of any other example, feature, aspect, or embodiment discussed in this specification.

Further advantages and features consistent with this disclosure will be set forth in the following detailed description, with reference to the figures.

Example System Hardware and Architecture

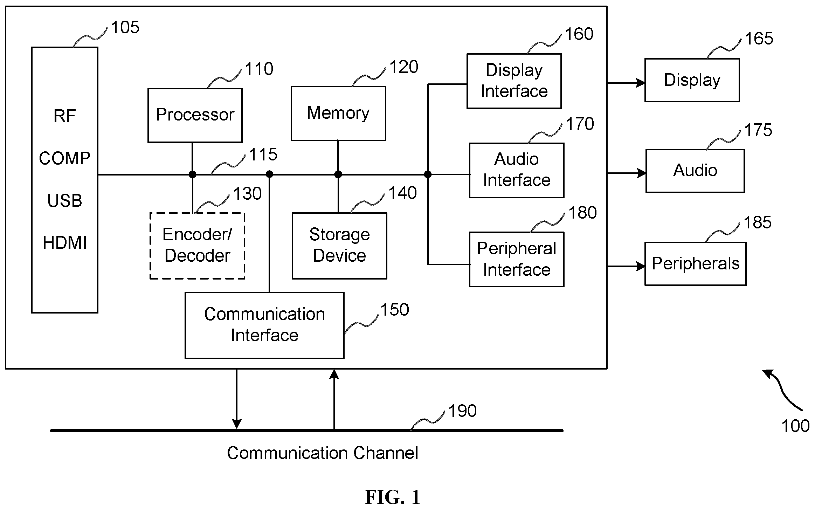

FIG. 1 is a block diagram illustrating a system 100, in accordance with various aspects of the disclosure for providing such techniques. As described herein, the system 100 performs video encoding and decoding. In the example of FIG. 1, the system 100 includes an input interface 105, an electronic processor 110, a memory 120, an optional dedicated encoder/decoder 130, a storage device 140, a communication interface 150, a display interface 160, an audio interface 170, and a peripheral interface 180.

In some implementations, the system 100 (also referred to herein as "computing system 100" or "computing device 100") may include fewer or additional components in configurations different from that illustrated in FIG. 1. Also, the system 100 may perform additional functionality than the functionality described herein. In addition, some of the functionality of the system 100 may be incorporated into other systems or other computing devices.

As illustrated in FIG. 1, the electronic processor 110, the memory 120, the optional dedicated encoder/decoder 130, the storage device 140, the communication interface 150, the display interface 160, the audio interface 170, the peripheral interface 180, and the input interface 105 are electrically coupled by one or more control or data buses 115 enabling communication between the components. In other examples, some of the components of the system 100 may be communicatively connected to each other with wireless communication in place of, or in addition to, the control or data buses 115.

The electronic processor 110 executes machine-readable instructions stored in the memory 120. For example, the electronic processor 110 may execute instructions stored in the memory 120 to perform the functionality described herein. In some examples, the electronic processor 110 is a microprocessor, a microcontroller, an embedded processor, a digital signal processor (DSP), a media processor, application-specific system processor (ASSP), an application-specific instruction set processor (ASIP), an application-specific integrated circuit (ASIC), a multiprocessor, or other suitable electronic processor.

The memory 120 may include a program storage area (for example, read only memory (ROM)) and a data storage area (for example, random access memory (RAM), and other non-transitory, machine-readable medium). In some examples, the program storage area includes an encoding/decoding application. In one example, the encoding/decoding application causes the electronic processor 110, the optional dedicated encoder decoder 130, or a combination thereof to perform the functionality described herein. In some examples, the data storage area may store video and/or image inputs received from the input interface 105.

The optional dedicated encoder/decoder 130 is an optional component dedicated to performing the encoding and decoding functionality described herein. The optional dedicated encoder/decoder 130 is considered "optional" because the electronic processor 110 in combination with the encoding/decoding application may perform the functionality described herein without involving the optional dedicated encoder/decoder 130.

In some examples, the optional dedicated encoder/decoder 130 may be electronic processing circuitry dedicated to performing the functionality described herein in tandem with the electronic processor 110. In these examples, the encoding/decoding application may coordinate encoding and decoding functions between the electronic processor 110 and the optional dedicated encoder/decoder 130.

In other examples, the optional dedicated encoder/decoder 130 may be electronic processing circuitry dedicated to performing the functionality described herein without involving the electronic processor 110. In these examples, the optional dedicated encoder/decoder 130 may be specific processing circuitry, specific video processing software/firmware, or a combination thereof.

The storage device 140 may include a program storage area that stores the encoding/decoding application. In some examples, the electronic processor 110 may load the memory 120 with the encoding/decoding application by retrieving the encoding/decoding application from the storage device 140.

The communication interface 150 may include communication circuitry configured to communicate with other communication interfaces via a communication channel 190 (for example, a network). In some examples, the communication interface 150 may be transmitter configured to transmit data, a receiver configured to receive data, or a transceiver configured to transmit data and receive data. In these examples, the communication interface 150 may be a modem, a network card, a Wi-Fi transceiver, a Bluetooth® transceiver, a cellular transceiver, or other suitable communication interface.

The display interface 160 may be communicatively connected to a display screen with an array of pixels that displays images to a user. In some examples, the display screen is one of a liquid crystal display (LCD) screen, a light-emitting diode (LED) display screen, a quantum dot light-emitting diode (QLED) display screen, an interferometric modulator display

(IMOD) screen, a micro light-emitting diode display screen (mLED), a virtual retinal display screen, or other suitable display screen.

The audio interface 170 may be communicatively connected to control an audio device. In some examples, the audio device may be speakers, headphones, earbuds, or other suitable audio device(s).

The peripheral interface 180 may be communicatively connected to control a peripheral device. In some examples, the peripheral device may be a keyboard, a mouse, or other suitable peripheral device(s).

The input interface 105 may receive one or more input signals from one or more input devices. The input interface 105 may provide the one or more input signals to the electronic processor 110 and/or the optional dedicated encoder/decoder 130 such that the electronic processor 110 and/or the optional dedicated encoder/decoder 130 may perform the encoding/decoding functionality described herein. In some examples, the input interface 105 may include a radio frequency (RF) receiver or transceiver that receives RF signals, a component input terminal, a composite video input terminal, a Universal Serial Bus (USB) input terminal, a High-Definition Multimedia Interface (HDMI) input terminal, or other suitable input terminal.

## Example Encoder System

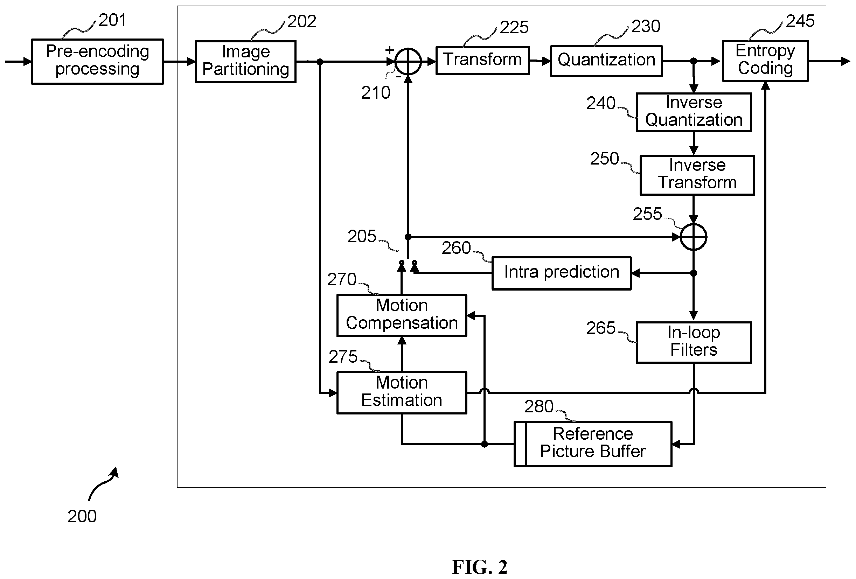

FIG. 2 illustrates an example of a block-based hybrid video encoder 200. Before being encoded, the video sequence may go through pre-encoding processing 201, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 200, a picture is encoded by the encoder elements as described below. The picture to be encoded is partitioned 202 and processed in units of, for example, CUs (Coding Units). Each unit is encoded using, for example, either an intra or inter mode. When a unit is encoded, in an intra mode, the encoder 200 performs intra prediction 260. In an inter mode, motion estimation 275 and compensation 270 are performed by the encoder 200. The encoder 200 determines (at 205) which one of the intra mode or inter mode to use for encoding the unit, and indicates the intra/inter decision by, for example, a prediction mode flag. Prediction residuals are calculated, for example, by subtracting 210 the predicted block from the original image block.

The prediction residuals are then transformed 225 and quantized 230. The quantized transform coefficients, as well as motion vectors and other syntax elements such as the picture partitioning information, are entropy coded 245 to output a bitstream. The encoder 200 may skip the transform 225 and apply quantization 230 directly to the non-transformed residual signal. The encoder 200 may bypass both transform 225 and quantization 230, i.e., the residual is coded directly without the application of the transform 225 or quantization 230 processes.

The encoder 200 decodes an encoded block to provide a reference for further predictions. The quantized transform coefficients are de-quantized 240 and inverse transformed 250 to decode prediction residuals. By combining at node 255, the decoded prediction residuals and the predicted block, an image block is reconstructed. In-loop filters 265 are applied to the reconstructed picture to perform, for example, deblocking/SAO (Sample Adaptive Offset)/ALF (Adaptive Loop Filter) filtering to reduce coding artifacts. The filtered image is stored in a reference picture buffer 280.

## Example Decoder System

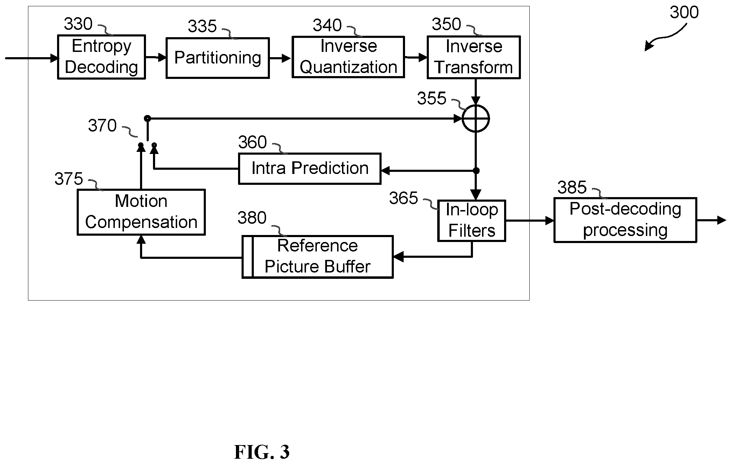

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder 300 includes a video bitstream, which can be generated by video encoder 200. The bitstream is first entropy decoded 330 to obtain transform coefficients, prediction modes, motion vectors, and other coded information. The picture partition information indicates how the picture is partitioned. The decoder 300 may therefore divide 335 the picture according to the decoded picture partitioning information. The transform coefficients are de-quantized 340 and inverse transformed 350 to decode the prediction residuals. By combining at node 355, the decoded prediction residuals and the predicted block, an image block is reconstructed. The predicted block can be obtained 370 from intra prediction 360 or motion-compensated prediction (i.e., inter prediction) 375. In-loop filters 365 are applied to the reconstructed image. The filtered image is stored at a reference picture buffer 380. Note that, for a given picture, the contents of the reference picture buffer 380 on the decoder 300 side is identical or nearly identical to the contents of the reference picture buffer 280 on the encoder 200 side for the same picture.

The decoded picture can further go through post-decoding processing 385, for example, an inverse color transform (e.g., conversion from YCbCr 4:2:0 to RGB 4:4:4) or an inverse remapping performing the inverse of the remapping process performed in the pre-encoding processing 201. The post-decoding processing can use metadata derived in the pre-encoding processing 201 and signaled in the bitstream.

Examples, instances, and aspects described herein relate to metadata indicative of region packing in a decoded picture, for example conveyed in an SEI message. Examples, instances, and aspects described herein may not be directly linked to a particular module of the encoder 200 or decoder 300.

## Multi-Layer Coding

Certain video encoding and decoding standards, such as VVC, enable multi-layer encoding with a multi-layered profile (for example, for Multiview or 360° use cases). Each layer, corresponding to a source, is coded separately or with inter-layer dependency. The resulting bitstreams are merged into a single bitstream with the layer information.

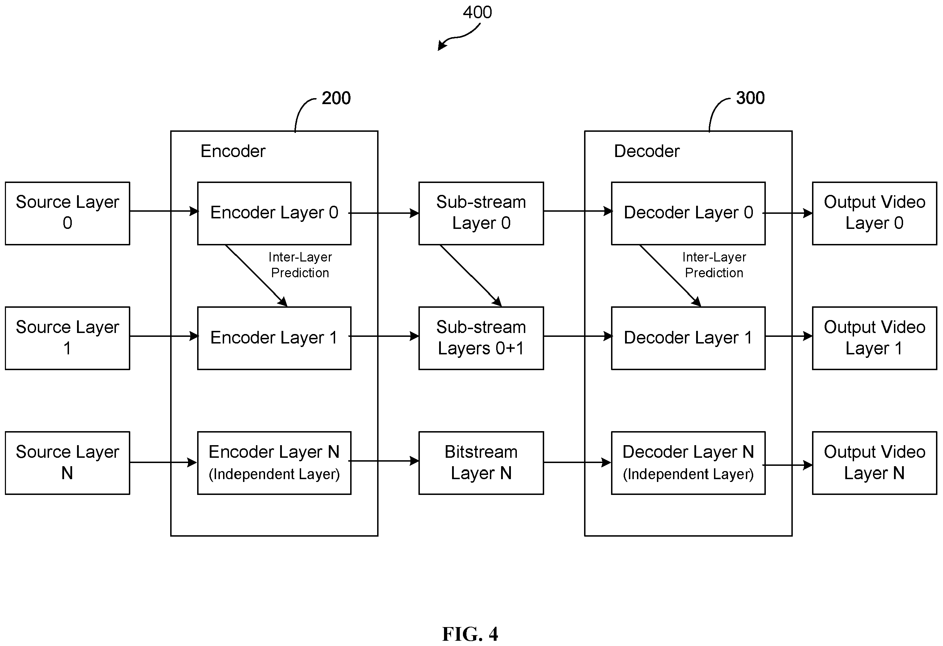

FIG. 4 illustrates a block diagram 400 of a multi-layer implementation of multilayer encoding and decoding. The block diagram 400 includes the encoder 200 and the decoder 300. In the encoder 200, separate encoder instances are created, one for each layer. Each layered encoder encodes its source (for example, in a spatial scalability implementation, each source corresponds to the same video sequence at a different resolution). Inter-layer prediction may be utilized by the layered encoders. For each picture, the layered encoder processes are launched. Layered encoders of lower layer IDs may be executed first due to inter-layer prediction dependency. The layer encoders may share layer-independent variables, such as Adaptive Parameter Sets (APS), Video Parameter Sets (VPS), and Sequence Parameter Sets (SPS).

For every picture, the output bitstreams are multiplexed into a common bitstream, with their corresponding layer ID information signaled at, for example, the Network Abstraction Layer Unit (NALU). The NALU is a syntax structure containing an indication of the type of data to follow and bytes containing that data in the form of a raw byte sequence payload interspersed as necessary with emulation prevention bytes. In some instances, several sub-streams may exist. In the example of FIG. 4, layer 0 may be decoded independently, and layer 1 may be decoded with layer 0 dependency, but independently of layer N.

For each frame, decoding a multilayer bitstream by the decoder 300 includes first decoding dependent layers frames before decoding the current layer frame. In the example of FIG. 4, layer 0 is decoded first, then layer 1 is decoded because layer 1 is dependent on layer 0. Layer N is an independent layer and may be decoded independently from the other layers. Each layer may include its own parameters. For example, quantization, resolution, and tools used may be different.

## Region Packing Information and SEI Messaging

Supplemental enhancement information (SEI) may be included in bitstreams to convey additional information to the bitstream. Examples, aspects, and instances described herein provide for a region packing information (RPI) and SEI message for packing of rectangular regions of interest (ROIs) from a larger picture into a smaller resolution coded picture. In such examples, the background may be coded at a lower resolution, while foreground objects of interest (such as faces) are coded at full resolution. In examples described herein, the foreground includes two faces. However, more or fewer faces may also be coded. The packed picture has a lower resolution than the native picture. Reconstruction of a target picture may be performed from the specified regions of the decoded picture.

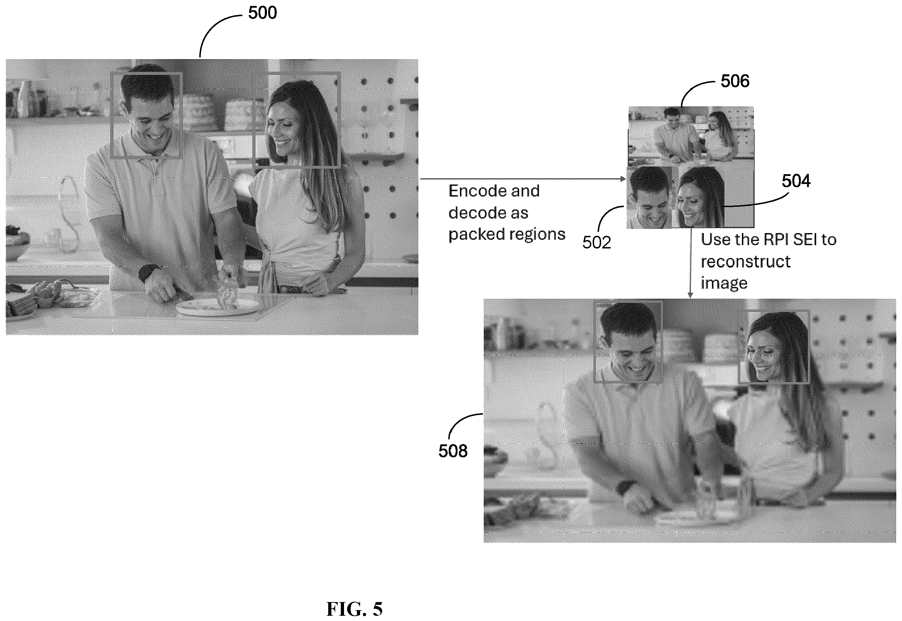

FIG. 5 illustrates one example of encoding and decoding packed regions using a RPI SEI message. The example of FIG. 5 includes a source image 500. Two regions of interest 502, 504 are identified in the source image 500 with a background 506. The background 506 is downsampled and packed in a new image with the regions of interest 502, 504. The new image is then coded with the RPI SEI message and is transmitted. A decoder decodes the RPI SEI message from a bitstream and reconstructs the information to generate a reconstructed image 508. The RPI SEI message includes resampling ratios for the two regions of interest 502, 504 and the background 506. In some implementations, the reconstructed image 508 has the same resolution as the source image 500. In other implementations, the background 506 may be altered (for example, blurred), resulting in a lower resolution of the reconstructed image 508. The reconstructed image 508 has a lower resolution than the source image 500 when the background 506 is downsampled. In some instances, the downsampling ratio of the background 506 may be 4 (horizontally and vertically), providing a pixel reduction of 1/16. Downsampling may reduce the bitrate and reduce the delay between transmission and encoding/decoding time.

## RPI SEI Message Format

SEI messages described herein provide information (such as packed regions information) regarding rectangular regions packed with a coded picture. This information may be used to reconstruct a target picture from the samples of the cropped decoded picture corresponding to regions described in the SEI message.

An SEI message as described herein may include various variables. In some examples, variables of the SEI message include picture dimensions, maximum picture dimensions, chroma indicators, bit depth information, and the like.

The picture dimensions may include a picture width and a picture height in units of luma samples. The picture width and picture height may be denoted herein by PicWidthInLumaSamples and PicHeightInLumaSamples, respectively. The maximum picture dimensions may include a maximum picture width and a maximum picture height in units of luma samples. The maximum picture width and the maximum picture height may be denoted herein by MaxPicWidth and MaxPicHeight, respectively.

A chroma format indicated may be denoted herein by ChromaFormatIdc. A bit depth for the samples of the luma component may be denoted herein by $BitDepth_Y$. When ChromaFormatIdc is not equal to 0, a bit depth for the samples of the two associated chroma components may be denoted herein by BitDepthc.

The following Table 1 is an example of the packed regions information header syntax.

**TABLE 1**

| packed_regions_info( payloadSize) { | Descriptor |
| --- | --- |

(continued)

| | |
|---|---|
| pri_cancel_flag | u(1) |
| if ( !pri_cancel_flag ) { | |
| pn_persistence flag | u(1) |
| pri_num_regions_minus1 | ue(v) |
| pri_use_max_dimensions_flag | u(1) |
| pri_log2_unit_size | u(4) |
| pri_region_size_len_minus1 | u(4) |
| pn region id_present flag | u(1) |
| pri_target_pic_params_present_flag | u(1) |
| if( pri_target_pic_params_present_flag) { | |
| pri_target_pic_width_minus1 | u(16) |
| pri_targetpic_height_minus1 | u(16) |
| } | |
| pri_num_resampling_ratios_minus1 | ue(v) |
| for( i = 1; i <= pri_num_resampling_ratios_minus1; i++ ) { | |
| pri_resampling_width_num_minus1[ i ] | ue(v) |
| pri_resampling_width_denom_minus1[ i ] | ue(v) |
| pri_fixed_aspect_ratio_flag[ i ] | u(1) |
| if( !pri_fixed_aspect_ratio_flag[ i ] ) { | |
| pri_resampling_height_num_minus1[ i ] | ue(v) |
| pri_resampling_height_denom_minus1[ i ] | ue(v) |
| } | |
| } | |
| for( i = 0; i <= pri_num_regions_minus1; i++ ) { | |
| if( pri_region_id_present_flag) | |
| pri_region_id[ i ] | ue(v) |
| pri_region_top_left_in_units_x[ i ] | u(v) |
| pri_region_top_left_in_units_y[ i ] | u(v) |
| pri_region_width_in_units_minus1[ i ] | u(v) |
| pri_region_height_in_units_minus1[ i ] | u(v) |
| if( pri_num_resampling_ratios_minus1 > 0 ) | |
| pri_resampling_ratio_idx[ i ] | u(v) |
| if( pri_target_pic_params_present_flag) { | |
| pri_target_region_top_left_x[ i ] | u(v) |
| pri_target_region_top_left_y[ i ] | u(v) |
| } | |
| } | |
| } | |
| } | |

The header data format of Table 1 includes pri_cancel_flag. When the pri_cancel_flag is equal to 1, the pri_cancel_flag indicates that the SEI message cancels the persistence of any previous packed regions information SEI message in output order that applies to the current layer. When the pri_cancel_flag is equal to 0, the pri_cancel_flag indicates the persistence of the packed regions information SEI message for the current layer.

The header data format of Table 1 includes pri_persistence_flag, which indicates the persistence of the packed regions information SEI message for the current layer. When the pri_persistence_flag is set to 0, the pri_persistence_flag indicates that the packed regions information applies to the current decoded picture only. When the pri_persistence_flag is set to 1, the pri_persistence flag indicates that the packed regions information SEI message applies to the current decoded picture and persists for all subsequent pictures of the current layer in output order until one or more of the following conditions are true: a new CLVS of the current layer begins, the bitstream ends, and/or a picture in the current layer in an AU associated with a packed regions information SEI message is output that follows the current picture in output order.

The header data format of Table 1 includes pri_numregions_minus1, which, plus 1, specifies the number of regions for which information is signalled.

The header data format of Table 1 includes pri_use_max_dimensions_flag. The pri_use_max_dimensions_flag, when equal to 1, indicates that MaxPicWidth, MaxPicHeight, PicWidthInLumaSamples, and PicHeightInLumaSamples will be used in variable calculations for the region parameters. The pri_use_max_dimensions_flag, when equal to 0, indicates that MaxPicWidth, MaxPicHeight, PicWidthInLumaSamples, and PicHeightInLumaSamples will not be used in variable calculations for the region parameters.

The header data format of Table 1 includes pri_log2_unit_size, which indicates a unit size used in variable calculations for the region parameters. The variable priUnitSize is set equal to 1 << pri_log2_unit_size.

The header data format of Table 1 includes pri_region_size_len_minus1. The pri_region_size_len_minus1, plus 1, specifies the number of bits used to signal pri_region_top_left_in_units_x[ i ], pri_region_top_left_in_units_y[ i ], pri_region_width_in_units_minus1[ i ], pri_region_height_in_units_minus1[ i ], pri_target_region_top_left_x[ i ], and pri_target_region_top_left_y[ i ].

The header data format of Table 1 includes pri_region_id_present_flag. The pri_region_id_present_flag, when equal to 1, indicates the pri_region_id[i] syntax element is present. The pri_region_id_present_flag, when equal to 0, indicates the pri_region_id[i] syntax element is not present.

The header data format of Table 1 includes pri_target_pic_params_present_flag. The pri_target_pic_params_present_flag, when equal to 1, indicates that the pri_target_region_top_left_x[ i ], pri_target_region_top_left_y[ i ], pri_target_pic_width_minus1, and pri_target_pic_height_minus1 syntax elements are present. The pri_target_pic_params_present flag, when equal to 0, indicates that the pri_target_region_top_left_x[ i ], pri_target_region_top_left_y[ i ], pri_target_pic_width_minus1, and pri_target_pic_height_minus1 syntax elements are not present.

The header data format of Table 1 includes pri_target_pic_width_minus1 and pri_target_pic_height_minus1. The pri_target_pic_width_minus1, plus 1, and the pri_target_pic_height_minus1, plus 1, when present, indicate the width and height, respectively, in luma samples of the target picture that may be reconstructed from the samples of the cropped decoded picture corresponding to the regions described in the SEI message.

The header data format of Table 1 includes pri_num_resampling_ratios_minus1, which indicates the number of resampling ratios that are signaled. When the pri_num_resampling_ratios_minus1 equals 0, only 1 resampling ratio equal to 1:1 is used. The syntax elements are not signaled and inferred to be: pri_resampling_width_num_minus1[ 0 ] = 0, pri_resampling_width_denom_minus1[ 0 ]=0, pri_fixed_aspect_ratio_flag[ 0]=1.

The header data format of Table 1 includes pri_resampling_width_num_minus1[i] and pri_resampling_width_widthdenom_minus1[i]. The pri_resampling_width_num_minus1[i], plus 1, and pri_resampling_width_denom_minus1[i], plus 1, indicate the numerator and denominator, respectively, for the width resampling of the i-th resampling ratio. Both pri_resampling_width_num_minus1[ i ] and pri_resampling_width_widthdenom_minus1[ i ] may be in the range of 0 to 65,535, inclusive. The values of pri_resampling_ratio_width_num_minus1[ 0 ] and pri_resampling_ratio_width_denom_minus1[ 0 ] may be inferred to be equal to 0.

The header data format of Table 1 includes pri_fixed_aspect_ratio_flag[i]. The pri_fixed_aspect_ratio_flag[i], when equal to 1, indicates that the pri_resampling_height_num_minus1[ i ] and pri_resampling_height_denom_minus1[ i ] syntax elements are not present. The pri_fixed_aspect_ratio_flag[i], when equal to 0, indicates that the pri_resampling_height_num_minus1[ i ] and pri_resampling_height_denom_minus1[ i ] syntax elements are present.

The header data format of Table 1 includes pri _resampling_height_numminus 1 [i] and pri_resampling_height_denom_minus1[i]. The pri_resampling_height_num_minus1[i], plus 1, and pri_resampling_height_denom_minus1[i], plus 1, indicate the numerator and denominator, respectively, for the height resampling of the i-th resampling ratio. Both pri _resampling _height _num _minus1[ i ] and pri _resampling _height _denom _minus1[ i ] may be in the range of 0 to 65,535, inclusive. When not present, the values of pri_resampling_height_num_minus1[ i ] and pri_resampling_height_denom_minus1[ i ] may be inferred to be equal to the pri_resampling_width_num_minus1[ i ] and pri_resampling_width_denom_minus1[ i ], respectively.

The header data format of Table 1 includes pri_region_id[i], which indicates the ID of the i-th region. When not present, the value of pri_region_id[i] may be inferred to be equal to i.

The header data format of Table 1 includes pri_region_top_left_in_units_x[i] and pri_region_top_left_in_units_y [i], which indicate the horizontal and vertical positions, respectively, of the top left sample of the i-th region in units. The length of the syntax elements are pri_region_size_len_minus1 + 1.

The variables priRegionTopLeftX[ i ] and priRegionTopLeftY, representing the horizontal and vertical positions, respectively, in luma samples of the region in the cropped decoded picture, may be derived as follows:

$$\text{if( !pri\_use\_max\_dimensions\_flag )\{}$$

$$\text{priRegionTopLeftX[i]} = \text{pri\_region\_top\_left\_in\_units\_x[i]} * \text{priUnitSize}$$

$$\text{priRegionTopLeftY[i]} = \text{pri)region\_top\_left\_in\_units\_y[i]} * \text{priUnitSize}$$

$$\text{\} else \{}$$

$$\text{priRegionTopLeftX[i]} = (\text{ pri\_region\_top\_left\_in\_units\_x[i]} * \text{priUnitSize} *$$

$$\text{PicWidthInLumaSamples} + \text{MaxPicWidth /2 ) / MaxWidth}$$

$$\text{priRegionTopLeftY[i]} = (\text{ pri\_region\_top\_left\_in\_units\_y[i]} * \text{priUnitSize} *$$

$$\text{PicHeightInLumaSamples} + \text{MaxPicHeight /2 ) / MaxHeight}$$

$$\text{\}}$$

The header data format of Table 1 includes pri_region_width_in_units_minus1[i] and pri_region_height_in_units_minus1[i]. The pri_region_width_in_units_minus1[i], plus 1, and pri_region_height_in_units_minus1[i], plus 1, specify the horizontal and vertical positions, respectively, of the width and height of the i-th region in units. The length of the syntax elements are pri_region_size_len_minus1 + 1.

The variables priRegionWidth[i] and priRegionHeight[i], representing the width and height, respectively, in luma samples of the i-th region in the cropped decoded picture, may be derived as follows:

$$\text{if( !pri\_use\_max\_dimensions\_flag )\{}$$

$$\text{priRegionWidth[i]} = (\text{ pri\_region\_width\_in\_units\_minus1 [i]+1 ) } *$$

$$\text{priUnitSize}$$

$$\text{priRegionHeight[i]} = (\text{ pri\_region\_height\_in\_units\_minus1 [i]+1 ) } *$$

$$\text{priUnitSize}$$

$$\text{\} else \{}$$

$$\text{priRegionWidth[i]} = (\text{ ( pri\_region\_width\_in\_units\_minus1 [i]+1 ) } *$$

$$\text{priUnitSize} *$$

$$\text{PicWidthInLumaSamples} + \text{MaxPicWidth /2 ) / MaxWidth}$$

$$\text{priRegionHeight[i]} = (\text{ ( pri\_region\_height\_in\_units\_minus1 [i]+1 ) } *$$

$$\text{priUnitSize}$$

$$* \text{ PicHeightInLumaSamples} + \text{MaxPicHeight /2 ) / MaxHeight}$$

$$\text{\}}$$

The priRegionWidth[i] % SubWidthC is equal to 0 and priRegionHeight[i] % SubHeight C is equal to 0 for bitstream conformance. The variables SubWidthC and SubHeightC are derived from ChromaFormatIdc, as described below with respect to Table 2.

The header data format of Table 1 includes pri_resampling_ratio_idx[i], which indicates the index of the resampling ratio used for the i-th region. The length of the syntax element is Ceil(Log2(pri_num_resampling_ratios_minus1 + 1)).

The variables priResampleWidthNum[i], p[riResampleWidthDenom[i], priResampleHeightNum[i], and priResampleHeightDenom[i] may be derived as follows:

$$priResampleWidthNum[i] =$$

$$pri\_resampling\_width\_num\_minus1[\ pri\_resampling\_ratio\_idx[i]\ ] + 1$$

$$priResampleWidthDenom[i] =$$

$$pri\_resampling\_width\_denom\_minus1[\ pri\_resampling\_ratio\_idx[i]\ ] + 1$$

$$priRseampleHeightNum[i] =$$

$$pri\_resampling\_height\_num\_minus1[\ pri\_resampling\_ratio\_idx[i]\ ] + 1$$

$$priRsampleHeightDenom[i] =$$

$$pri\_resampling\_height\_denom\_minus1[\ pri\_resampling\_ratio\_idx[i]\ ] + 1$$

The header data format of Table 1 includes pri_target_region_top_left_x[i] and pri_target_region_top_left_y[i], which, when present, indicate the horizontal and vertical positions, respectively, of the top left sample position in luma samples of the i-th region in the reconstructed target picture.

The variables priTargetRgionWidth and priTargetRegionHeight, representing the width and height, respectively, in luma samples of the sampled region in the reconstructed target picture, may be derived as follows:

$$priTargetRegionWidth = Round(\ (\ priRegionWidth[i] * priResampleWidthNum[i]$$

$$)\div$$

$$(\ priResampleWidthDenom[i] * SubWidthC\ )\ ) * SubWidthC$$

$$priTargetRegionHeight = Round(\ (\ priRegionHeight[i] *$$

$$priResampleHeightNum[i]\ ) \qquad \div (\ priResampleHeightDenom[i] * SubHeightC\ )$$

$$) * SubHeightC$$

When reconstructing a target picture with a luma sample array of size (pri_target_pic_width_minus1 + 1) $\times$ (pri_target_pic_height_minus1 + 1), all luma sample values are initialized to value 1 << ( BitDepth$_Y$ - 1) and chroma samples, if present, to 1 << ( BitDepthc - 1).

The reconstructed target picture sample at position (x,y) is determined by the parameters signaled for the j-th region if, for any sample position (x,y) and regions j and k the following conditions are all met: (i) pri_region_id[ j ] > pri_region_id[ k ]; (ii) x is in (priRegionTopLeftX[ j ] .. priRegionTopLeftX[ j ] + priRegionWidth[ j ]); (iii) y is in (priRegionTopLeftY[ j ] .. priRegionTopLeftY[ j ] + priRegionHeight[ j ]); (iv) x is in (priRegionTopLeftX[ k ] .. priRegionTopLeftX[ k ] + priRegionWidth[ k]); and (v) y is in (priRegionTopLeftY[ k ] .. priRegionTopLeftY[ k ] + priRegionHeight[ k ]).

Coding and transmitting regions in different layers allows the use of different encoder and quality settings. Additionally, layers may be easily managed at the system level. Different layers allow for adding more functionalities to the current RPI SEI functionalities already described, such as providing for changing the background and dynamically changing a region resolution or quality without redoing the frame packing.

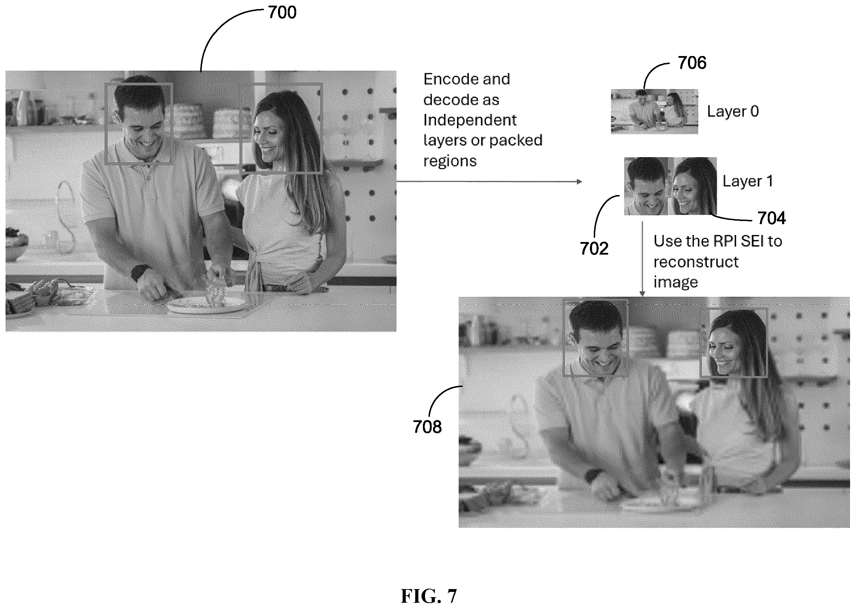

In one example, multi-layer encoding is implemented to transmit each region in a separate layer, or in combination with region-packing, such as depicted in FIG. 7. In such an example, an overall flag indicates whether multi-layer coding is implemented or not. When multi-layer coding is implemented, information is added in the RPI SEI message to indicate for each region which layer it originates from.

The following Table 2 is an example of the SEI message header syntax, including a flag (pri_multilayer_flag) indicating whether the bitstream is a multilayer bitstream and, if true, layer information is added for each region. The pri_multilayer_flag may instead be included in a parameter set, such as APS, VPS, or SPS.

**TABLE 2**

| packed_regions_info( payloadSize) { | Descriptor |
|---|---|
|   pri_cancel_flag | u(1) |
|   if ( !pri_cancel_flag ) { | |
|     pri_persistence_flag | u(1) |
|     pri_num_regions_minus1 | ue(v) |
|     pri_multilayer_flag | u(1) |
|     pri_use_max_dimensions_flag | u(1) |
|     pri_log2_unit_size | u(4) |
|     pri_region_size_len_minus1 | u(4) |
|     pri_region_id_present_flag | u(1) |
|     pn target_pic_params_present flag | u(1) |
|     if( pri_target_pic_params_present_flag) { | |
|       pri_target_pic_width_minus1 | u(16) |
|       pri_target_pic_height_minus1 | u(16) |
|     } | |
|     pri_num_resampling_ratios_minus1 | ue(v) |
|     for( i = 1; i <= pri_num_resampling_ratios_minus1; i++ ) { | |
|       pn_resampling_width_num_minus1[ i ] | ue(v) |
|       pri_resampling_width_denom_minus1[ i ] | ue(v) |
|       pri_fixed_aspect_ratio_flag[ i ] | u(1) |
|       if( !pri_fixed_aspect_ratio_flag[ i ] ) { | |
|         pri_resampling_height_num_minus1[ i ] | ue(v) |
|         pri_resampling_height_denom_minus1[ i ] | ue(v) |
|       } | |
|     } | |
|     for( i = 0; i <= pri_num_regions_minus1; i++ ) { | |
|       if( pri_region_id_present_flag ) | |
|         pri_region_id[ i ] | ue(v) |
|       if( pri_multilayer_flag) | |
|         pri_region_layer_id[ i ] | ue(v) |
|       pri_region_top_left_in_units_x[ i ] | u(v) |
|       pri_region_top_left_in_units_y[ i ] | u(v) |
|       pri_region_width_in_units_minus1[ i ] | u(v) |
|       pri_region_height_in_units_minus1[ i ] | u(v) |
|       if( pri_num_resampling_ratios_minus1 > 0 ) | |
|         pri_resampling_ratio_idx[ i ] | u(v) |
|       if( pri_target_pic_params_present_flag) { | |
|         pri_target_region_top_left_x[ i ] | u(v) |
|         pri_target_region_top_left_y[ i ] | u(v) |
|       } | |

(continued)

| | |
|---|---|
| } | |
| } | |
| } | |

The header data format of Table 2 is substantially similar to that of Table 1, with the addition of pri_multilayer_flag and pri_region_layer_id[i]. Consequently, any redundant description of the header data format between Table 1 and Table 2 is omitted.

The pri_multilayer_flag, when equal to 1, indicates that the pri_region_layer_id[i] syntax element is present. The pri_multilayer_flag, when equal to 0, indicates that the pri_region_layer_id[i] syntax element is not present. The pri_multilayer_flag may be transmitted in the bitstream separately from the RPI SEI message, and may instead be included in the APS, VPS, or SPS.

The pri_region_layer_id[i] indicates the layer id of the picture that the region information (e.g., syntax elements pri_region_top_left_in_units_x[i], pri_region_top_left_in_units_y[i], pri_region_width_in_units_minus1[i], pri_region_height_in_units_minus1[i]) relate to. When pri_region_layer_id[i] is not present, the value is inferred to be 0, or it is inferred to be the layer_id of the layer the RPI SEI applies to (single layer).

In instances where the bitstream is a multilayer bitstream, but the RPI SEI message uses only a subset of the layers (at least one), each used layer i can be identified by its layer ID in the SEI as pri_used_layer_id[i]. If more than one layer is used pri_num_used_layer_minus1 > 0, the layer is identified for each region i with pri_region_used_layer_idx[i]. Each ROI is individually distributed on a single layer. Each layer may include more than one ROI.

The following Table 3 is an example of the packed regions information header syntax, including identification of the used layers.

**TABLE 3**

| packed_regions_info( payloadSize) { | Descriptor |
|---|---|
| pri_cancel_flag | u(1) |
| if ( !pri_cancel_flag ) { | |
| pri_persistence_flag | u(1) |
| pri_num_regions_minus1 | ue(v) |
| pri_multilayer_flag | u(1) |
| if( pri_multilayer_flag) { | |
| pri_num_used_layer_minus1 | ue(v) |
| for(j = 0; j <= pri_num_used_layer_minus1; j++ ) { | |
| pri_used_layer_id[ j ] | ue(v) |
| } | |
| } | |
| pri_use_max_dimensions_flag | u(1) |
| pri_log2_unit_size | u(4) |
| pri_region_size_len_minus1 | u(4) |
| pri_region_id_present_flag | u(1) |
| pri_target_pic_params_present_flag | u(1) |
| if( pri_target_pic_params_present_flag) { | |
| pri_target_pic_width_minus1 | u(16) |
| pri_target_pic_height_minus1 | u(16) |
| } | |
| pri_num_resampling_ratios_minus1 | ue(v) |
| for( i = 1; i <= pri_num_resampling_ratios_minus1; i++ ) { | |

(continued)

| | |
|---|---|
| pri_resampling_width_num_minus1[ i ] | ue(v) |
| pri_resampling_widthdenom_minus1[ i ] | ue(v) |
| pri_fixed_aspect_ratio_flag[ i ] | u(1) |
| if( !pri_fixed_aspect_ratio_flag[ i ] ) { | |
| pri_resampling_height_num_minus1[ i ] | ue(v) |
| pri_resampling_height_denom_minus1[ i ] | ue(v) |
| } | |
| } | |
| for( i = 0; i <= pri_num_regions_minus1; i++ ) { | |
| if( pri_region_id_present_flag ) | |
| pri_region_id[ i ] | ue(v) |
| if( pri_num_used_layer_minus1 > 0 ) | |
| pri_region_used_layer_idx [ i ] | ue(v) |
| pri_region_top_left_in_units_x[ i ] | u(v) |
| pri_region_top_left_in_units_y[ i ] | u(v) |
| pri_region_width_in_units_minus1[ i ] | u(v) |
| pri_region_height_in_units_minus1[ i ] | u(v) |
| if( pri_num_resampling_ratios_minus1 > 0 ) | |
| pri_resampling_ratio_idx[ i ] | u(v) |
| if( pri_target_pic_params_present_flag) { | |
| pri_target_region_top_left_x[ i ] | u(v) |
| pri_target_region_top_left_y[ i ] | u(v) |
| } | |
| } | |
| } | |
| } | |

The header data format of Table 3 is substantially similar to that of Table 1, with the addition of pri_multilayer_flag, pri_num_used_layer_minus1, rpi_used_layer_id[i], and pri_region_used_layer_idx[i]. Consequently, any redundant description of the header data format between Table 1 and Table 3 is omitted.

The pri_multilayer_flag, when equal to 1, indicates that layer syntax elements are present. The pri_multilayer_flag, when equal to 0, indicates that layer syntax elements are not present and rpi_used_layer_id[0] is not signaled (and is inferred to be 0), or is inferred to be the layer_id of the layer the RPI SEI applies to (single layer).

The pri_num_used_layer_minus1, plus 1, indicates the number of layers used for the regions. When pri_num_used_layer_minus1 is not present, it is inferred to be 0, rpi_used_layer_id[0] is not signaled and is inferred to be 0, or is inferred to be the layer_id of the layer the RPI SEI applies to (single layer).

The rpi_used_layer_id[i] indicates the j-th layer id used for the region.

The pri_region_used_layer_idx[i] indicates the used layer ID index for the i-th region. When the pri_region_used_layer_idx[i] is not present, it is inferred to be 0. The layer ID used for layer i (pri_region_layer_id[i]) is inferred according to: pri_region_layer_id[i] = rpi_used_layer_id [ pri_region_used_layer_idx[i] ].

In instances where a region covers a whole layer picture, position and size of each region may be omitted. For example, the background may be sent as an independent layer and is fully used for the region. For each region, a flag pri_region_is_a_layer is added for each region.

The following Table 4 is an example of the packed regions information header syntax where a region is a whole layer.

**TABLE 4**

| | |
|---|---|
| for( i = 0; i <= pri_num_regions_minus1; i++ ) { | |
| if( pri_region_id_present_ flag) | |
| pri_region_id[ i ] | ue(v) |
| if( pri_multilayer_flag) { | |
| pri_region_layer_id[ i ] | ue(v) |
| pri_region_is_a_layer[ i ] | ue(v) |
| } | |
| if( !pri_region_is_a_layer[ i ]) { | |
| pri_region_top_left_in_units_x[ i ] | u(v) |
| pri_region_top_left_in_units_y[ i ] | u(v) |
| pri_region_width_in_units_minus1[ i ] | u(v) |
| pri_region_height_in_units_minus1[ i ] | u(v) |
| } | |
| if( pri_num_resampling_ratios_minus1 > 0 ) | |
| pri_resampling_ratio_idx[ i ] | u(v) |
| if( pri_target_pic_params_present_flag) { | |
| pri_target_region_top_left_x[ i ] | u(v) |
| pri_target_region_top_left_y[ i ] | u(v) |
| } | |
| } | |

The header data format of Table 4 is substantially similar to that of Table 3, with the addition of the pri_region_is_a_layer[i], Consequently, any redundant description of the header data format between Table 1 and Table 4 is omitted. Table 4 may be used in conjunction with the header data format of Table 2 and/or Table 3.

The pri_region_is_a_layer[i], when equal to 1, indicates that the whole layer is used as the region, and position and size information are not signaled. When pri_region_is_a_layer[i] is not signaled, it is inferred to be 0.

The following Table 5 is an example of the packed regions information header syntax where all regions are in separate layers.

**TABLE 5**

| packed_regions_info( payloadSize) { | Descriptor |
|---|---|
| pri_cancel_flag | u(1) |
| if ( !pri_cancel_flag ) { | |
| pri_persistence_flag | u(1) |
| pri_num_regions_minus1 | ue(v) |
| pri_multilayer_flag | u(1) |
| if( pri_multilayer_flag) { | |
| pri_all_regions_are_layers | u(1) |
| } | |
| ... | u(1) |
| for( i = 0; i <= pri_num_regions_minus1; i++ ) { | |
| if( pri_region_id_present_ flag) | |
| pri_region_id[ i ] | ue(v) |

(continued)

| | |
|---|---|
| if( pri_multilayer_flag) { | |
| pri_region_layer_id[ i ] | ue(v) |
| if( ! pri_all_regions_are_layers) { | |
| pri_region_is_a_layer[ i ] | ue(v) |
| } | |
| } | |
| if( !pri_region_is_a_layer[i]) { | |
| pri_region_top_left_in_units_x[ i ] | u(v) |
| pri_region_top_left_in_units_y[ i ] | u(v) |
| pri_region_width_in_units_minus1[ i ] | u(v) |
| pri_region_height_in_units_minus1[ i ] | u(v) |
| } | |
| ... | |

The header data format of Table 5 is substantially similar to that of Table 3, with the addition of pri_all_regions_are_layers. Consequently, redundant description of the header data format between Table 3 and Table 5 is omitted. When pri_all_regions_are_layers is equal to 1, pri_all_regions_are_layers indicates that all the regions use the full signaled layer. In this case, pri_region_is_a_ layer[i] is inferred to be 1 for every layer i, and is not signaled.

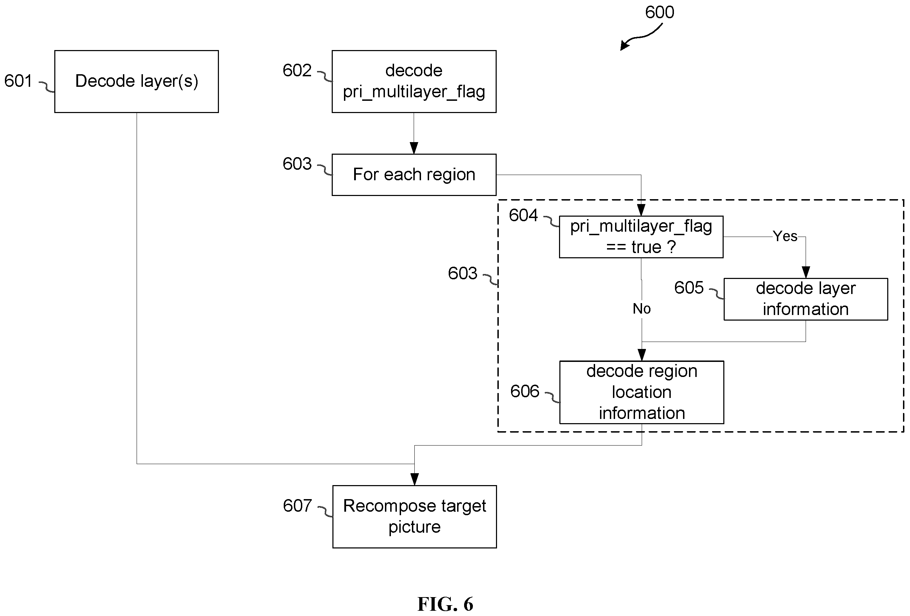

FIG. 6 illustrates a flowchart of an example method 600 of a decoding and post-decoding process implementing RPI functionality. The method 600 includes decoding one or more picture layers from the input bitstream (at block 601). The method 600 includes decoding the flag pri_multilayer_flag from the SEI message inserted in the input bitstream (at block 602). The method 600 also includes performing a loop 603 over each of the regions.

In the loop 603, the method 600 includes determining whether the pri_multilayer_flag is true (at decision block 604). When the pri_multilayer_flag is true ("YES" at the decision block 604), the method 600 includes decoding layer information related to the region from the SEI message (at block 605). After decoding layer information related to the region from the SEI message (at block 605), the method 600 includes decoding region location information from the SEI message (at block 606).

Returning to decision block 604, when the pri_multilayer_flag is not true ("NO" at decision block 604), the method 600 includes decoding region location information from the SEI message (at block 606). The method 600 also includes recomposing the target picture from the decoded layer pictures and from the regions' layer and location information (at block 607).

FIG. 7 is an example of encoding and decoding multilayer packed regions using a RPI SEI message. The example of FIG. 7 includes a source image 700. The background 706 of the source image 700 is downsampled and coded in an independent layer (layer 0). Regions of interest 702, 704 are packed in a new image and coded in another independent layer (layer 1). The bitstream is transmitted with the RPI SEI message. The bitstream is decoded and reconstructed image 708 is generated from the information of the decoded RPI SEI message.

The following are enumerated methods, devices, non-transitory computer-readable media, and systems with RPI SEI message with multi-layer functionality. Example 1: A method comprising: receiving, with a decoder, a bitstream, the bitstream including packed regions of interest of an image; decoding, with the decoder, a multilayer flag and an SEI message from the bitstream; determining, with the decoder, whether to decode region layer information from the SEI message for the packed regions of interest based on the multilayer flag; and recomposing, with the decoder, the image from the region layer information

Example 2: The method of Example 1, further comprising: decoding one or more picture layers from the bitstream, wherein recomposing the image from the region layer information includes recomposing the image from the decoded picture layers.

Example 3: The method of any of Examples 1 to 2, wherein determining whether to decode region layer information from the SEI message for the packed regions of interest based on the multilayer flag includes: determining whether the multilayer flag indicates true or false; decoding the region layer information from the SEI message when the multilayer flag indicates true; and skipping the decoding of the region layer information from the SEI message when the multilayer flag indicates false.

Example 4: The method of any of Examples 1 to 3, further comprising: decoding region location information from the SEI message, wherein recomposing the image from the region layer information includes recomposing the image from the region location information.

Example 5: The method of any of Examples 1 to 4, further comprising: decoding, with the decoder, region information from the bitstream, wherein the region layer information indicates a layer identifier of the image, and wherein the region information included in the bitstream relates to the layer identifier.

Example 6: The method of any of Examples 1 to 5, further comprising: decoding a number of used layers indicator from the bitstream, the number of used layers indicator indicating a number of layers that are used for the packed regions of interest.

Example 7: The method of any of Examples 1 to 6, further comprising: decoding a regions used layer indicator from the bitstream, the regions used layer indicator indicating a used layer identifier index for an associated region.

Example 8: The method of any of Examples 1 to 7, further comprising: decoding a whole layer indicator from the bitstream, the whole layer indicator indicating whether an associated region of interest covers a whole layer picture.

Example 9: The method of Example 8, wherein the whole layer indicator further indicates whether position and size information associated with the region of interest are decoded from the bitstream.

Example 10: A device including a decoder configured to perform a method according to any of Examples 1 to 9.

Example 11: A method comprising: receiving, with an encoder, an image including packed regions of interest, each packed region of interest distributed individually on only one of two or more layers; generating, with the encoder, a bitstream based on the packed regions of interest and the image, wherein the bitstream includes a multilayer flag indicating the two or more layers; and outputting, with the encoder, the bitstream.

Example 12: The method of Example 11, wherein generating, with the encoder, the bitstream based on the packed regions of interest and the image further includes generating, in the bitstream, region layer information associated with the packed regions of interest.

Example 13: The method of any of Examples 11 to 12, wherein generating, with the encoder, the bitstream based on the packed regions of interest and the image further includes generating, in the bitstream, region location information associated with the packed regions of interest.

Example 14: A device including an encoder configured to perform a method according to any one of Examples 11-13.

Example 15: A system including a decoder configured to perform a method according to any one of Examples 1 to 10 and an encoder configured to perform a method according to any one of claims 11-13.

In the foregoing specification, specific embodiments, examples, aspects, and features have been described. However, one of ordinary skill in the art appreciates that various modifications and changes can be made without departing from the scope of the subject matter as set forth in the claims below. Accordingly, the specification and figures are to be regarded in an illustrative rather than a restrictive sense, and all such modifications are intended to be included within the scope of present teachings. The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover, the present aspects are not limited to VVC or HEVC, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Moreover, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing," or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a," "has ... a," "includes ... a," or "contains ... a" does not, without more constraints, preclude the existence of additional identical elements in the process, method, article, or apparatus that comprises, has, includes, contains the element. Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

Also, it should be understood that the illustrated components, unless explicitly described to the contrary, may be combined or divided into separate software, firmware, and/or hardware. For example, instead of being located within and performed by a single electronic processor, logic and processing described herein may be distributed among multiple electronic processors. Similarly, one or more memory modules and communication channels or networks may be used even if embodiments described or illustrated herein have a single such device or element. Also, regardless of how they are combined or divided, hardware and software components may be located on the same computing device or may be distributed among multiple different devices. Accordingly, in this description and in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

It will be appreciated that some embodiments, examples, aspects, and features may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, one or more of the embodiments, examples, aspects, and features presented herein can be implemented as a computer-readable storage medium having computer readable code stored thereon for programming a computer (e.g., comprising a processor) to perform a method as described and claimed herein. Any suitable computer-usable or computer readable medium may be utilized. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. In the context of this document, a computer-usable or computer-readable medium may be any medium that can contain, store, communicate, propagate, or transport the program for use by or in connection with the instruction execution system, apparatus, or device.

Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation. For example, computer program code for carrying out operations of various example embodiments may be written in an object-oriented programming language such as Java, Smalltalk, C++, Python, or the like. However, the computer program code for carrying out operations of various example embodiments may also be written in conventional procedural programming languages, such as the "C" programming language or similar programming languages. The program code may execute entirely on a computer, partly on the computer, as a stand-alone software package, partly on the computer and partly on a remote computer or server or entirely on the remote computer or server. In the latter scenario, the remote computer or server may be connected to the computer through a local area network (LAN) or a wide area network (WAN), or the connection may be made to an external computer (for example, through the Internet using an Internet Service Provider).

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terms "substantially," "essentially," "approximately," "about," or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "one of," without a more limiting modifier such as "only one of," and when applied herein to two or more subsequently defined options such as "one of A and B" should be construed to mean an existence of any one of the options in the list alone (e.g., A alone or B alone) or any combination of two or more of the options in the list (e.g., A and B together).

A device or structure that is "configured" in a certain way is configured in at least that way, but may also be configured in ways that are not listed.

The terms "coupled," "coupling," or "connected" as used herein can have several different meanings depending on the context in which these terms are used. For example, the terms coupled, coupling, or connected can have a mechanical or electrical connotation. For example, as used herein, the terms coupled, coupling, or connected can indicate that two elements or devices are directly connected to one another or connected to one another through intermediate elements or devices via an electrical element, electrical signal or a mechanical element depending on the particular context.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples and embodiments for the purpose of streamlining the disclosure. This method of disclosure is not to be interpreted as reflecting an intention that the claimed subject matter requires more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

Thus, the present disclosure provides, among other things, region packing information with multi-layer functionality. Various features and advantages of the invention are set forth in the following claims.

**Claims**

1. A method comprising:

   receiving, with a decoder, a bitstream, the bitstream including packed regions of interest of an image;
   decoding, with the decoder, a multilayer flag and a supplemental enhancement information (SEI) message from the bitstream;
   determining, with the decoder, whether to decode region layer information from the SEI message for the packed regions of interest based on the multilayer flag; and
   recomposing, with the decoder, the image from the region layer information.

**2.** The method of claim 1, further comprising:

decoding one or more picture layers from the bitstream,
wherein recomposing the image from the region layer information includes recomposing the image from the decoded picture layers.

**3.** The method of claim 1, wherein determining whether to decode region layer information from the SEI message for the packed regions of interest based on the multilayer flag includes:

determining whether the multilayer flag indicates true or false;
decoding the region layer information from the SEI message when the multilayer flag indicates true; and
skipping the decoding of the region layer information from the SEI message when the multilayer flag indicates false.

**4.** The method of claim 1, further comprising:

decoding region location information from the SEI message,
wherein recomposing the image from the region layer information includes recomposing the image from the region location information.

**5.** The method of claim 1, further comprising:

decoding, with the decoder, region information from the bitstream,
wherein the region layer information indicates a layer identifier of the image, and
wherein the region information included in the bitstream relates to the layer identifier.

**6.** The method of claim 1, further comprising:
decoding a number of used layers indicator from the bitstream, the number of used layers indicator indicating a number of layers that are used for the packed regions of interest.

**7.** The method of claim 1, further comprising:
decoding a regions used layer indicator from the bitstream, the regions used layer indicator indicating a used layer identifier index for an associated region.

**8.** The method of claim 1, further comprising:
decoding a whole layer indicator from the bitstream, the whole layer indicator indicating whether an associated region of interest covers a whole layer picture.

**9.** The method of claim 8, wherein the whole layer indicator further indicates whether position and size information associated with the region of interest are decoded from the bitstream.

**10.** A device including a decoder configured to perform a method according to any one of claims 1-9.

**11.** A method comprising:

receiving, with an encoder, an image including packed regions of interest, each packed region of interest distributed individually on only one of two or more layers;
generating, with the encoder, a bitstream based on the packed regions of interest and the image, wherein the bitstream includes a multilayer flag indicating the two or more layers; and
outputting, with the encoder, the bitstream.

**12.** The method of claim 11, wherein generating, with the encoder, the bitstream based on the packed regions of interest and the image further includes generating, in the bitstream, region layer information associated with the packed regions of interest.

**13.** The method of claim 11, wherein generating, with the encoder, the bitstream based on the packed regions of interest and the image further includes generating, in the bitstream, region location information associated with the packed regions of interest.

**14.** A device including an encoder configured to perform a method according to any of one of claims 11-13.

**15.** A system including a decoder configured to perform a method according to any one of claims 1-10 and an encoder configured to perform a method according to any of one of claims 11-13.

FIG. 1

FIG. 2

**FIG. 3**

400

200

300

| Source Layer 0 | → | Encoder Layer 0 | → | Sub-stream Layer 0 | → | Decoder Layer 0 | → | Output Video Layer 0 |

Encoder

Decoder

Inter-Layer Prediction

Inter-Layer Prediction

| Source Layer 1 | → | Encoder Layer 1 | → | Sub-stream Layers 0+1 | → | Decoder Layer 1 | → | Output Video Layer 1 |

| Source Layer N | → | Encoder Layer N (Independent Layer) | → | Bitstream Layer N | → | Decoder Layer N (Independent Layer) | → | Output Video Layer N |

**FIG. 4**

500

506

504

Encode and
decode as
packed regions

502

Use the RPI SEI to
reconstruct
image

508

FIG. 5

EP 4 676 053 A1

**FIG. 6**

FIG. 7

EP 4 676 053 A1

## EUROPEAN SEARCH REPORT

**Application Number**

EP 24 30 6080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOYCE (NOKIA) J ET AL: "AHG9: Region packing information SEI", 34. JVET MEETING; 20240417 - 20240424; RENNES; (THE JOINT VIDEO EXPLORATION TEAM OF ISO/IEC JTC1/SC29/WG11 AND ITU-T SG.16 ), , no. JVET-AH0161 10 April 2024 (2024-04-10), XP030317524, Retrieved from the Internet: URL:https://jvet-experts.org/doc_end_user/documents/34_Rennes/wg11/JVET-AH0161-v1.zip JVET-AH0161-v1.docx [retrieved on 2024-04-10] * the whole document * | 1-15 | INV. H04N19/33 H04N19/46 H04N19/70 |
| X | WO 2019/073113 A1 (NOKIA TECHNOLOGIES OY [FI]) 18 April 2019 (2019-04-18) * paragraph [0151] - paragraph [0155] * * paragraph [0281] - paragraph [0283] * | 1-15 | |
| X | US 2023/308674 A1 (HENDRY HENDRY [KR] ET AL) 28 September 2023 (2023-09-28) * paragraph [0191] - paragraph [0199]; figures 8,9 * * paragraph [0376] - paragraph [0379] * * paragraph [0390] * | 1-15 | **TECHNICAL FIELDS SEARCHED (IPC)** H04N |

The present search report has been drawn up for all claims

| Place of search | Date of completion of the search | Examiner |
|---|---|---|
| Munich | 5 December 2024 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6080

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | | Publication date |
|---|---|---|---|---|
| WO 2019073113 A1 | 18-04-2019 | NONE | | |
| US 2023308674 A1 | 28-09-2023 | US | 2023308674 A1 | 28-09-2023 |
| | | WO | 2022039513 A1 | 24-02-2022 |

EPO FORM P0459

For more details about this annex : see Official Journal of the European Patent Office, No. 12/82